# EUROPEAN PATENT SPECIFICATION

(11) **EP 2 163 335 B1**
(45) Date of publication and mention of the grant of the patent: **09.11.2011**
(21) Application number: 09169373.9
(22) Date of filing: 03.09.2009
(51) Int. Cl.: B23D 45/12, B23D 45/20

(54) **Vertical machine with dual oscillating blades for cutting pipes and cutting method by means of said machine**
Vertikale Maschine mit zwei schwingenden Klingen zum Schneiden von Rohren und Verfahren zum Schneiden mithilfe der Maschine
Machine verticale dotée de doubles lames oscillantes pour découper des tuyaux et procédé de découpe grâce à ladite machine

(30) Priority: 12.09.2008 IT MI20081635
(43) Date of publication of application: 17.03.2010
(73) Proprietor: Olimpia 80 SRL, 27020 Borgo San Siro PV (IT)
(72) Inventor: Travini, Vittorio, 27020 Borgo San Siro (Pavia) (IT)
(74) Representative: Petruzziello, Aldo

(56) References cited:
- DE-U1- 29 923 067
- JP-A- 7 040 120

## Description

The present invention refers to a vertical machine with dual oscillating blades for cutting into portions of preset length a continuously produced pipe, normally realised by welding the edges of a strip of sheet metal bent by a machine for forming pipes. Such a machine is known from JP07040120, or wich are based the preambles of claims 1 and 7.

Known to the art are machines for cutting pipes which normally comprise a carriage that can slide on a base - the length of which depends on the speed of the pipe forming machine and on the cutting time - to which is fixed a structure that supports cutting means (consisting of at least one blade or a disc) and ad least one vice that holds the pipe still during cutting.

Cutting blades often have a rectilinear movement whereas discs can have a rectilinear movement or can be made to rotate around the pipe to be cut.

In order to cut the pipe, cutting machines of the prior art perform at least the steps of starting up the carriage until it reaches the advancement speed of the continuous pipe, locking the pipe to the carriage and, at the end of cutting, releasing the pipe from the carriage and making the carriage return to the initial position.

Cutting machines of the prior art are often complex and bulky and/or their cutting cycle often has idle times (due to the need at the end of each cut to re-set the configuration of the machine - and in particular the position of the cutting means - to that required for the next cut) which have a negative impact on the productivity of the entire production line: in fact, an excessively long cutting cycle makes it necessary to reduce the speed of the pipe forming machine, with obvious negative financial repercussions.

Object of the present invention is to produce a vertical machine with two oscillating blades for cutting pipes which does not show the above described drawbacks and limitations. This object is achieved by means of a vertical machine for cutting pipes, comprising two oscillating blades, which has the characterising features indicated in independent claim 1 and which operates according to the method illustrated in independent claim 7.

Further advantageous characteristics of the invention form the subject matter of the dependent claims.

A vertical machine with dual oscillating blades for cutting pipes, realised according to the invention, comprises a carriage, sliding on a base, to which are fixed means able to lock the pipe during cutting and a structure which supports an oscillating plate with which are integral two parallel linear guides on each of which slides a shoe, moved by an actuator, which supports a cutting blade and optionally means able to make said blade rotate.

The two shoes slide along the guides in opposite directions; the carriage also supports means able to make the plate oscillate around an axis coinciding with that of the pipe to be cut. During the cutting cycle, the oscillation of the plate around said axis is advantageously symmetrical with respect to the vertical.

The method of cutting a pipe by means of said machine comprises (besides the steps of starting up the carriage until the speed of advancement of the pipe is reached, locking the pipe on the carriage and, at the end of cutting, releasing the pipe from the carriage and making the carriage return to the initial position), the steps of bringing the cutting means into contact with the pipe by making the shoes slide along the guides integral with the oscillating plate and, when the cutting means have fully penetrated the pipe, making the oscillating plate rotate and making the shoes continue to slide along the guides until the cutting means are withdrawn from the pipe.

The invention will now be described with reference to purely exemplifying (and therefore non limiting) embodiments thereof illustrated in the appended figures wherein:
- Figure 1 shows diagrammatically a perspective view of a machine realised according to the invention;
- Figure 2 shows diagrammatically a second perspective view, opposite to that of Figure 1, of the machine of Figure 1;
- Figure 3 shows diagrammatically a side view of the machine of Figure 1;
- Figure 4 shows diagrammatically an enlarged front view of the carriage belonging to the machine of Figure 1;
- Figure 5 shows diagrammatically an enlarged rear view of the carriage of Figure 4.

In the appended figures corresponding parts will be identified by means of the same reference numerals.

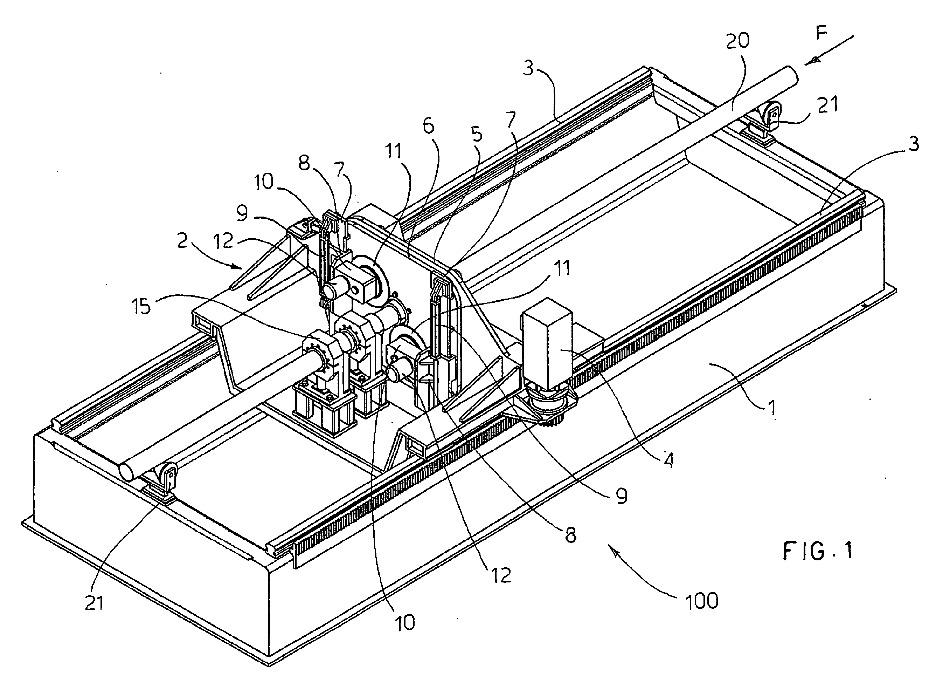

Figure 1 shows diagrammatically a perspective view of a vertical machine 100 with a dual oscillating blade, realised according to the invention and suitable for cutting pipes 20, produced continuously, which slide in the direction of the arrow F on rollers 21 (or on other known sliding means).

The vertical machine 100 comprises a carriage 2, sliding on the base 1, to which are fixed means 15 able to lock the pipe 20 during cutting and a structure 5 which supports an oscillating plate 6 with which are integral two parallel linear guides 7, on each of which slides a shoe 8, moved by an actuator 9, which supports a cutting blade 11 and motorisation means 12 able to make said blade rotate.

In the preferred embodiment described in the appended figures, the cutting blades 11 consist of discs made to rotate by motorisation means 12 but, without departing from the scope of the invention, the cutting blades 11 can consist of blades made to translate by motorisation means 12.

Before the start of cutting the shoes 8 are in diametrically opposite positions with respect to the pipe 20 and during cutting they slide in opposite directions along the guides 7 until they occupy specular positions to the initial ones: at the end of a cutting cycle the blades 11 are therefore already in position to carry out the subsequent cut, by inverting the direction of sliding of the shoes 8 on the guides 7 with respect to the direction of sliding during the cutting cycle that has just ended.

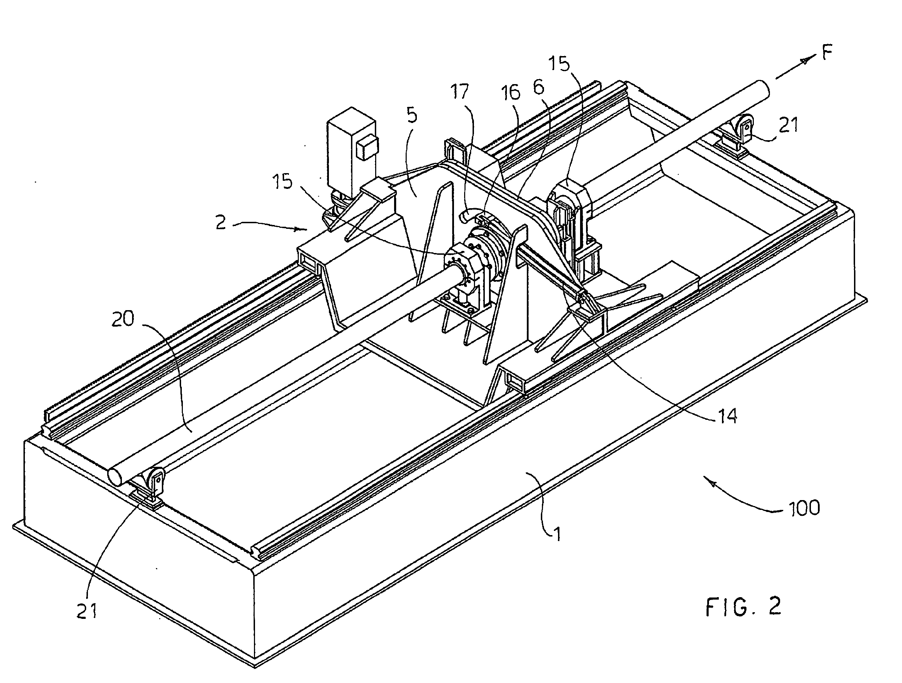

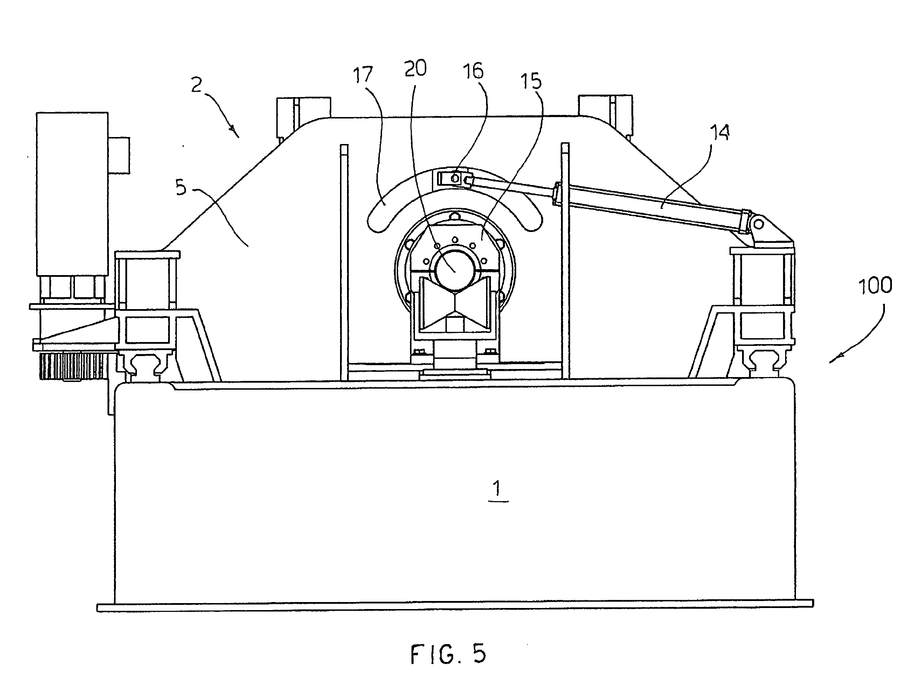

The carriage 2 further supports means (one embodiment of which will be described with reference to Figures 2 and 5) able to make the plate 6 oscillate around an axis coinciding with that of the pipe 20 to be cut.

During a cutting cycle, the oscillation of the plate 6 around said axis is preferably between -45° and +45° and in any case is symmetrical with respect to the vertical axis of symmetry of the structure 5.

In the embodiment illustrated in the appended figures, the base 1 is U-shaped, the carriage 2 slides on the guides 3 and is moved by a rack and pinion system 4 and the pipe 20 is locked during cutting by jaws 15 but, without departing from the scope of the invention, the base 1 may have a different shape and the means for making the carriage 2 slide on the base 1 and for locking the pipe 20 may be different from those previously indicated.

Figure 2 shows diagrammatically a second perspective view of the cutting machine 100, opposite to that of Figure 1, which shows the base 1, the carriage 2 that supports the structure 5, the pipe 20 sliding on the rollers 21 and locked by the vices 15 and the means that make the plate 6 oscillate.

These means consist of an arm 16 integral with the plate 6, mobile in a slot 17 formed in the structure 5 and activated by an actuator 14 integral with the structure 5. The slot 17 is arch-shaped and its width determines the maximum extent of the oscillation of the plate 6.

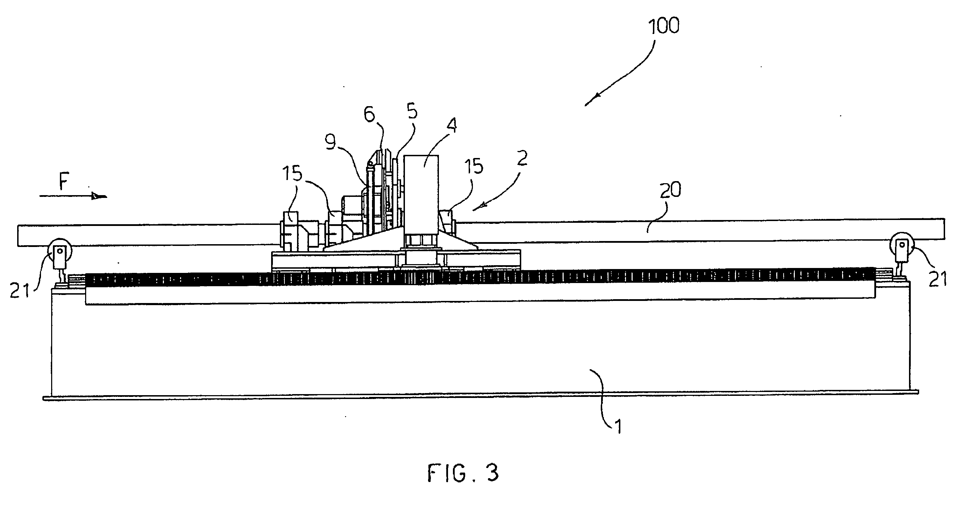

Figure 3 shows diagrammatically a side view of the cutting machine 100, which shows the base 1, the carriage 2 that supports the structure 5, one of the actuators 9 that move the plate 6, and the pipe 20, sliding on rollers 21 and locked by the vices 15.

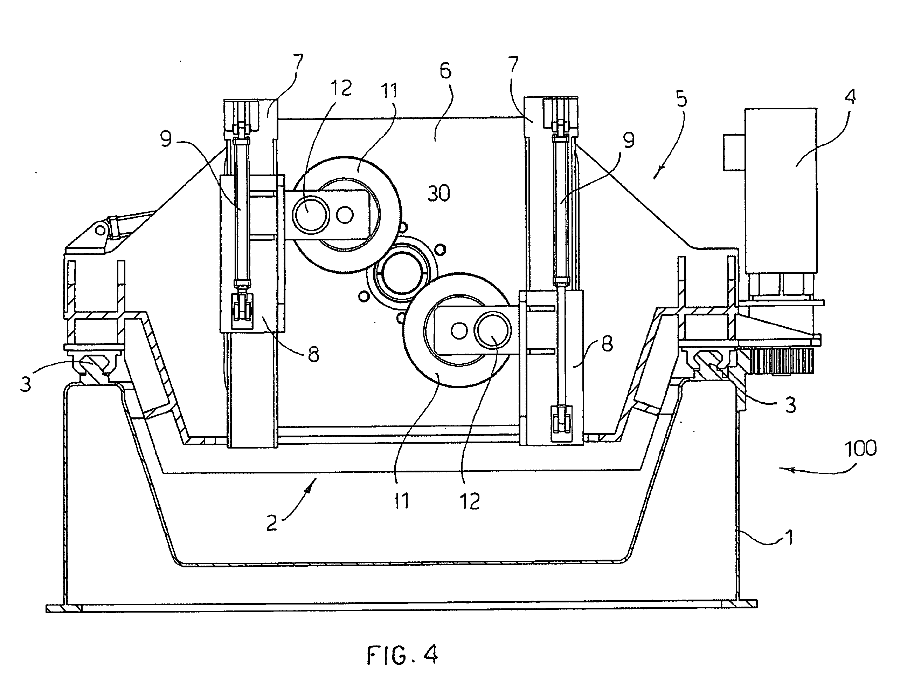

Figure 4 shows diagrammatically an enlarged front view of the carriage 2, belonging to the cutting machine 100, which bears the structure 5.

Figure 4 shows more clearly the oscillating plate 6 (coupled to the structure 5 by a bush 30 or other functionally equivalent coupling means), the guides 7 on which the shoes 8 that support the blades 11 slide, and the motorisation means 12 and the actuators 7 that move the shoes 8 along the guides 7 integral with the plate 6.

Figure 5 shows diagrammatically an enlarged rear view of the carriage 2 of Figure 4, where the means (consisting of the arm 16 integral with the plate 6, mobile in the slot 17 - shaped as a circle arch - formed in the structure 5 and activated by the actuator 14 integral with the structure 5) which make the plate 6 oscillate are situated.

The method according to the invention for cutting a pipe 20 by means of a machine 100 comprises (besides the steps of starting the carriage 2 until it reaches the speed of advancement of the pipe 20, locking the pipe 20 to the carriage 2 and, at the end of cutting, releasing the pipe 20 from the carriage 2 and making the carriage 2 return to its initial position) at least the further steps of:
- bringing the cutting means 11 into contact with the pipe 20 by making the sliding shoes 8 slide along the guides 7 integral with the oscillating plate 6,and:
- when the cutting means 11 have fully penetrated the pipe 20, making the oscillating plate 6 rotate and making the sliding shoes 8 continue to slide along the guides 7 until the cutting means 11 are withdrawn from the pipe 20.

Without departing from the scope of the invention, a person skilled in the art can make to the above described vertical machine with dual blade for cutting pipes all those modifications and improvements suggested by normal experience and/or by the natural evolution of the art.

## Claims

1. A vertical machine (100) with dual oscillating blades for cutting a continuous pipe (20), including a carriage (2), sliding on a base (1), on which means (15) able to lock the pipe (20) during the cutting operation and a structure (5) supporting the cutting means (11) are fixed, wherein:
- the structure (5) supports an oscillating plate (6) with which two parallel linear guides (7) are integral;
- a sliding shoe (8) moved by an actuator (9) and supporting the cutting means (11) slides along each guide (7);
- before the beginning of the cutting cycle, the sliding shoes (8) are in diametrically opposite positions with respect to the pipe (20) and slide in opposite directions along the guides (7) during the cutting operation until occupying positions which are specular to the initial ones; **characterized in that**:
- the carriage (2) also supports means able to make the plate (6) oscillate around an axis which coincides with that of the pipe (20) to be cut.

2. The vertical cutting machine (100) as in claim 1, **characterized in that** the cutting means (11) are composed of a cutting blade and **in that** each sliding shoe (8) also supports means (12) able to make said cutting blade (11) rotate.

3. The vertical cutting machine (100) as in claim 1, **characterized in that**, at the end of a cutting cycle, the blades (11) are in position to carry out the subsequent cutting operation by inverting the sliding direction of the sliding shoes (8) along the guides (7) with respect to the sliding direction during the previous cutting cycle.

4. The vertical cutting machine (100) as in claim 1, **characterized in that**, during a cutting cycle, the oscillation of the plate (6) is symmetrical with respect to the axis of symmetry of the structure (5).

5. The vertical cutting machine (100) as in claim 4, **characterized in that**, during a cutting cycle, the oscillation of the plate (6) is between -45° and +45° with respect to the axis of symmetry of the structure (5).

6. The vertical cutting machine (100) as in claim 1, **characterized in that** the means able to make the plate (6) oscillate include an arm (16) integral with the plate (6), which is mobile in a slot (17) realized in the structure (5) and is activated by an actuator (14) integral with the structure (5), the slot (17) being arch-shaped and determining the maximum width of the oscillation of the plate (6).

7. A method for cutting a pipe (20) by means of a machine (100) as in at least one of the previous claims, comprising the steps of starting the carriage (2) until reaching the speed of advancement of the pipe (20), locking the pipe (20) to the carriage (2), releasing the pipe (20) from the carriage (2) upon the end of the cutting operation and making the carriage (2) return to its initial position,
bringing the cutting means (11) in contact with the pipe (20) by making the sliding shoes (8) slide along the guides (7) integral with the oscillating plate (6); **characterized by** comprising at least the additional step of:
- when the cutting means (11) have fully penetrated the pipe (20), making the oscillating plate (6) rotate and allowing the sliding shoes (8) to continue to slide along the guides (7) until the cutting means (11) are withdrawn from the pipe (20).

## Patentansprüche

1. Vertikale Maschine (100) mit zwei schwingenden Klingen zum Schneiden eines Endlosrohres (20), umfassend einen Schlitten (2), der auf einer Basis (1) gleitet, an welchem Mittel (15), die in der Lage sind, das Rohr (20) während des Schneidevorgangs zu arretieren, und eine Konstruktion (5), welche die Schneidmittel (11) trägt, befestigt sind, wobei:
- die Konstruktion (5) eine Schwingplatte (6) trägt, mit welcher zwei parallele lineare Führungen (7) als Einheit ausgebildet sind;
- ein Gleitschuh (8), der durch ein Betätigungsglied (9) bewegt wird und die Schneidmittel (11) trägt, jede Führung (7) entlang gleitet;
- vor Beginn des Schneidezyklus die Gleitschuhe (8) sich in in Bezug auf das Rohr (20) diametral entgegengesetzten Positionen befinden und während des Schneidevorgangs in entgegengesetzte Richtungen die Führungen (7) entlang gleiten, bis sie Positionen, die spiegelbildlich zu den Ausgangspositionen sind, einnehmen; **dadurch gekennzeichnet, dass**
- der Schlitten (2) auch Mittel trägt, die in der Lage sind, die Platte (6) um eine Achse in Schwingung zu versetzen, welche mit jener des zu schneidenden Rohres (20) übereinstimmt.

2. Vertikale Schneidmaschine (100) nach Anspruch 1, **dadurch gekennzeichnet, dass** sich die Schneidmittel (11) aus einer Schneidklinge zusammensetzen und dass jeder Gleitschuh (8) auch Mittel (12) trägt, die in der Lage sind, die Schneidklinge (11) in Drehung zu versetzen.

3. Vertikale Schneidmaschine (100) nach Anspruch 1, **dadurch gekennzeichnet, dass** am Ende eines Schneidzyklus die Klingen (11) in einer Position sind, um den nachfolgenden Schneidvorgang durch Umkehren der Gleitrichtung der Gleitschuhe (8) entlang den Führungen (7) in Bezug auf die Gleitrichtung während des vorhergehenden Schneidzyklus durchzuführen.

4. Vertikale Schneidmaschine (100) nach Anspruch 1, **dadurch gekennzeichnet, dass** während eines Schneidzyklus die Schwingung der Platte (6) in Bezug auf die Symmetrieachse der Konstruktion (5) symmetrisch ist.

5. Vertikale Schneidmaschine (100) nach Anspruch 4, **dadurch gekennzeichnet, dass** während eines Schneidzyklus die Schwingung der Platte (6) in Bezug auf die Symmetrieachse der Konstruktion (5) zwischen -45° und +45° erfolgt.

6. Vertikale Schneidmaschine (100) nach Anspruch 1, **dadurch gekennzeichnet, dass** die Mittel, die in der Lage sind, die Platte (6) in Schwingung zu versetzen, einen mit der Platte (6) als Einheit ausgebildeten Arm (16) umfassen, der in einem Schlitz (17), welcher in der Konstruktion (5) vorgesehen ist, beweglich ist und durch ein mit der Konstruktion (5) als Einheit ausgebildetes Betätigungsglied (14) betätigt wird, wobei der Schlitz (17) bogenförmig ist und die maximale Breite der Schwingung der Platte (6) bestimmt.

7. Verfahren zum Schneiden eines Rohres (20) mittels einer Maschine (100) nach mindestens einem der vorhergehenden Ansprüche, umfassend die Schritte des Inbetriebsetzens des Schlittens (2) bis zum Erreichen der Vorschubgeschwindigkeit des Rohres (20), des Arretierens des Rohres (20) am Schlitten (2), des Lösens des Rohres (20) von dem Schlitten (2) nach Ende des Schneidevorgangs und des Rückführens des Schlittens (2) in seine Ausgangsposition, des Bringens der Schneidmittel (11) in Kontakt mit dem Rohr (20) durch Bewirken, dass die Gleitschuhe (8) die Führungen (7) entlang gleiten, welche mit der Schwingplatte (6) als Einheit ausgebildet sind;
**dadurch gekennzeichnet, dass** es mindestens folgende zusätzliche Schritte umfasst:
- wenn die Schneidmittel (11) das Rohr (20) vollkommen durchdrungen haben, das Versetzen der Schwingplatte (6) in Drehung und das Ermöglichen, dass die Gleitschuhe (8) weiterhin die Führungen (7) entlang gleiten, bis die Schneidmittel (11) aus dem Rohr (20) zurückgezogen wurden.

## Revendications

1. Machine verticale (100) dotée de doubles lames oscillantes pour découper un tuyau continu (20), incluant un chariot (2), coulissant sur une base (1), sur laquelle des moyens (15) aptes à verrouiller le tuyau (20) pendant l'opération de découpe et une structure (5) soutenant les moyens de découpe (11) sont fixés, dans laquelle :
- la structure (5) soutient une plaque oscillante (6) avec laquelle deux guides linéaires parallèles (7) sont en un seul tenant ;
- un sabot coulissant (8) déplacé par un actionneur (9) et soutenant les moyens de découpe (11) coulisse le long de chaque guide (7) ;
- avant le début du cycle de découpe, les sabots coulissants (8) sont dans des positions diamétralement opposées par rapport au tuyau (20) et coulissent dans des directions opposées le long des guides (7) pendant l'opération de découpe jusqu'à ce qu'ils occupent des positions qui sont spéculaires aux positions initiales ;
**caractérisée en ce que**
- le chariot (2) soutient aussi des moyens aptes à faire osciller la plaque (6) autour d'un axe qui coïncide avec celui du tuyau (20) à découper.

2. Machine de découpe verticale (100) selon la revendication 1, **caractérisé en ce que** les moyens de découpe (11) sont composés d'une lame de découpe et **en ce que** chaque sabot coulissant (8) soutient aussi des moyens (12) aptes à faire tourner ladite lame de découpe (11).

3. Machine de découpe verticale (100) selon la revendication 1, **caractérisée en ce que**, à la fin du cycle de découpe, les lames (11) sont en position d'effectuer l'opération de découpe subséquente en inversant les directions de coulissement des sabots coulissants (8) le long des guides (7) par rapport à la direction de coulissement pendant le cycle de découpe précédent.

4. Machine de découpe verticale (100) selon la revendication 1, **caractérisée en ce que**, pendant un cycle de découpe, l'oscillation de la plaque (6) est symétrique par rapport à l'axe de symétrie de la structure (5).

5. Machine de découpe verticale (100) selon la revendication 4, **caractérisé en ce que**, pendant un cycle de découpe, l'oscillation de la plaque (6) est comprise entre -45° et +45° par rapport à l'axe de symétrie de la structure (5).

6. Machine de découpe verticale (100) selon la revendication 1, **caractérisée en ce que** les moyens aptes à faire osciller la plaque (6) incluent un bras (16) en un seul tenant avec la plaque (6), qui est mobile dans une encoche (17) réalisée dans la structure (5) et est activé par un actionneur (14) en un seul tenant avec la structure (5), l'encoche (17) étant de forme arquée et déterminant la largeur maximale de l'oscillation de la plaque (6).

7. Procédé de découpe d'un tuyau (20) au moyen d'une machine (100) selon au moins une des revendications précédentes, comprenant les étapes consistant à démarrer le chariot (2) jusqu'à atteindre la vitesse d'avancée du tuyau (20), verrouiller le tuyau (20) au chariot (2), détacher le tuyau (20) du chariot (2) à la fin de l'opération de coupe et ramener le chariot (2) à sa position initiale, amener le moyen de découpe (11) en contact avec le tuyau (20) en faisant coulisser les sabots coulissants (8) le long des guides (7) en un seul tenant avec la plaque oscillante (6) ;
**caractérisé en ce qu'**il comprend au moins l'étape additionnelle consistant à :
- quand les moyens de découpe (11) ont complètement pénétré le tuyau (20), faire tourner la plaque oscillante (6) et permettre aux sabots coulissants (8) de continuer à coulisser le long des guides (7) jusqu'à ce que les moyens de découpe (11) soient retirés du tuyau (20).
